# EUROPÄISCHE PATENTSCHRIFT

(11) **EP 1 480 432 B1**
(45) Veröffentlichungstag und Bekanntmachung des Hinweises auf die Patenterteilung: **21.03.2007**
(21) Anmeldenummer: 04011667.5
(22) Anmeldetag: 17.05.2004
(51) Int. Cl.: H04M 9/02

(54) **Verfahren zum einrichten einer Hauskommunikationsanlage**
Method for programming an intercom device
Procédé de programmation d'un appareil interphone

(30) Priorität: 22.05.2003 DE 10323226
(43) Veröffentlichungstag der Anmeldung: 24.11.2004
(73) Patentinhaber: S. Siedle & Söhne Telefon- und Telegrafenwerke OHG, 78120 Furtwangen (DE)
(72) Erfinder: Reetz, Ingo, 78141 Schönwald (DE)
(74) Vertreter: Leinweber & Zimmermann

(56) Entgegenhaltungen:
- EP-A- 0 946 035
- WO-A-02/091596
- DE-A- 10 029 943

## Beschreibung

Die Erfindung betrifft ein Verfahren zum Einrichten einer Hauskommunikationsanlage mit
n (n ≥ 2) Wohnungsstationen,
mindestens einer Türstation mit (zusammen) n Rufeinrichtungen und
einem Bus zum Verbinden der Stationen miteinander.

Bei Hauskommunikationsanlagen auf Basis der Bustechnologie werden Zuordnungen bzw. Festlegungen, daß beispielsweise eine definierte Rufeinrichtung (Ruftaste oder Klingeltaste) ein definiertes Haustelefon (Wohnungsstation) ruft, im weitesten Sinne durch eine Art Programmierung realisiert. Im Gegensatz dazu werden die oben erwähnten Zuordnungen in sternförmigen Topologien alter Technik mit Hilfe von zahlreichen Drähten - mindestens ein Draht pro Telefon - vorgenommen.

Zur Programmierung bzw. zum Einrichten von Bussystemen sind verschiedene Verfahren bekannt. Bei einem der bekannten Verfahren ist es erforderlich, daß die einander zuzuordnenden Geräte sich gleichzeitig in einem besonderen Zustand (Programmiermodus) befinden müssen, um durch eine definierte Aktion (z.B. Ruftaste länger als drei Sekunden drücken) die Zuordnung zu speichern. Ein solches Verfahren zum Einrichten ist zeitaufwendig. Darüber hinaus ist es vergleichsweise kompliziert, weshalb der jeweilige Installateur sehr erfahren sein muß.

Aus der EP 0 946 035 A2 ist ein Verfahren zum Einrichten einer Hauskommunikationsanlage bekannt, das weitestgehend automatisch, nämlich selbstlernend arbeitet. Dabei wird der Vorgang des Selbstlernens durch das Betätigen einer Ruftaste ausgelöst, vgl. Abschnitt [0077].

Die DE 100 29 943 A1 offenbart ein Verfahren zum Einrichten einer Hauskommunikationsanlage, bei dem mit einem Programmierbefehl eines Eingabegerätes ein Mikrocontroller für die Einspeicherung eines individuellen Rufsignals aktivierbar ist. Der Mikrocontroller ist dabei einer Rufeinrichtung individuell zugeordnet.

Der Erfindung liegt die Aufgabe zugrunde, ein Verfahren der eingangs genannten Art anzugeben, das weniger zeitaufwendig und einfacher ist.

Erfindungsgemäß wird die gestellte Aufgabe mit einem Verfahren gelöst, das folgende Schritte umfaßt:
a) Die Türstation wird an den Bus angeschlossen,
b) eine erste Wohnungsstation wird an den Bus angeschlossen,
c) ansprechend auf das Anschließen an den Bus gibt die Wohnungsstation ein Anmeldesignal ab,
d) ansprechend auf das Anmeldesignal wird eine erste Rufadresse sowohl der Wohnungsstation als auch einer ersten Rufeinrichtung zugeordnet,
e) eine weitere Wohnungsstation wird an den Bus angeschlossen,
f) ansprechend auf das Anschließen an den Bus gibt die weitere Wohnungsstation ein Anmeldesignal ab,
g) ansprechend auf das Anmeldesignal wird eine weitere, noch nicht vergebene Rufadresse sowohl der weiteren Wohnungsstation als auch einer weiteren, noch nicht belegten Rufeinrichtung zugeordnet,
h) die Schritte e) bis g) werden (n - 2) Mal wiederholt.

Insbesondere dadurch, daß die Zuordnung der jeweils zu vergebenden Rufadresse sowohl zu der jeweiligen Wohnungsstation als auch zu der jeweiligen Rufeinrichtung ansprechend auf das bloße Anschließen der jeweiligen Wohnungsstation an den Bus und mithin selbsttätig erfolgt, kann das Einrichten mit minimiertem Zeitaufwand erfolgen. Ferner insbesondere im Hinblick auf die selbsttätige Zuordnung ist das erfindungsgemäße Verfahren auch besonders einfach. Es müssen nur die Wohnungsstationen in derjenigen Reihenfolge an den Bus angeschlossen werden, die der Reihenfolge des Ansprechens der Rufeinrichtungen entspricht. Wenn beispielsweise vier Rufeinrichtungen übereinanderliegen und sie jeweils beim Anschließen einer Wohnungsstation von oben nach unten belegt werden, so muß nur mit derjenigen Wohnungsstation begonnen werden, die der obersten Rufeinrichtung zugeordnet werden soll. Ein das Einrichten verkomplizierendes und verlängerndes gleichzeitiges Berücksichtigen der gerade anzuschließenden wohnungstation und der Rufeinrichtung, beispielsweise weil beide gleichzeitig in einen Programmiermodus versetzt werden müssen, ist nicht erforderlich.

Das erfindungsgemäße Einrichtungsverfahren ist aber nicht nur auf Hauskommunikationsanlagen mit zwei oder mehr Wohnungsstationen anzuwenden. Vielmehr bezieht sich die Erfindung auch auf Hauskommunikationsanlagen mit nur einer Wohnungsstation. Die Erfindung schafft daher auch ein Verfahren zum Einrichten einer Hauskommunikationsanlage mit
einer Wohnungsstation,
mindestens einer Türstation mit einer Rufeinrichtung und
einem Bus zum Verbinden der Stationen miteinander,
wobei erfindungsgemäß folgende Schritte vorgesehen sind:

Die Türstation wird an den Bus angeschlossen,
die Wohnungsstation wird an den Bus angeschlossen,
ansprechend auf das Anschließen an dem Bus gibt die Wohnungstation ein Anmeldesignal als und
ansprechend auf das Anmeldesignal wird eine Rufadresse sowohl der Wohnungsstation als auch der Rufeinrichtung zugeordnet.

Wie bereits oben erläutert, ist es nach dem erfindungsgemäßen Verfahren nicht erforderlich, die Türstation, eine (bestimmte) Rufeinrichtung daran und die gerade anzuschließende Wohnungsstation gleichzeitig in einen Programmiermodus zu versetzen, was das Einrichten verlängern und verkomplizieren würde. Insbesondere aus Gründen der Verläßlichkeit der Zuordnung kann es aber erfindungsgemäß bevorzugt vorgesehen sein, daß sich die Hauskommunikationsanlage zum Zeitpunkt des Anschließens einer Wohnungsstation in einem Programmiermodus befindet und/oder die Türstation sich zu diesem Zeitpunkt in einem Lernmodus befindet.

Die Zuordnung von Rufadressen kann prinzipiell beliebig erfolgen. Erfindungsgemäß bevorzugt ist es allerdings, daß zum Zuordnen einer Rufadresse eine Steuereinrichtung ein der Rufadresse zugeordnetes Adreßsignal an den Bus gibt.

Insbesondere bei dieser Ausgestaltung ist es erfindungsgemäß weiter bevorzugt, daß die Türstation ansprechend auf ein Adreßsignal einer Rufeinrichtung und/oder einer Wohnungsstation die entsprechende Rufadresse zuordnet. Mit anderen Worten überwacht die Türstation bei dieser Ausgestaltung den Bus auf ein eventuell daran abgegebenes Adreßsignal. Sobald ein solches Adreßsignal auf den Bus gegeben wird, führt die Türstation selbsttätig die Zuordnung des Adreßsignals zu der jeweiligen Rufeinrichtung und/oder zu der jeweiligen Wohnungsstation durch.

Zusätzlich oder alternativ kann diese Zuordnung erfindungsgemäß aber auch von einer eigens vorgesehenen Zuordnungseinrichtung durchgeführt werden, die an den Bus angeschlossen wird und ansprechend auf ein Adreßsignal einer Rufeinrichtung und/oder einer Wohnungsstation die entsprechende Rufadresse zuordnet.

Bei einer solchen Zuordnungseinrichtung kann es sich insbesondere um einen entsprechend programmierten PC (personal computer) handeln, der nur für das Einrichten der Hauskommunikationsanlage angeschlossen wird. Zusätzlich oder alternativ kann aber auch eine entsprechende Schaltung dauerhaft an den Bus angeschlossen sein.

Die Zuordnung von Adressen kann erfindungsgemäß auf beliebige Weise erfolgen. Erfindungsgemäß bevorzugt ist es jedoch, daß zum Zuordnen einer Rufadresse zu einer Wohnungsstation und/oder einer Rufeinrichtung ein der Wohnungsstation bzw. der Rufeinrichtung zugeordneter Speicher mit einer der Rufadresse zugeordneten Information beschrieben wird.

Neben dem oben beschriebenen Verfahren schafft die Erfindung auch eine Hauskommunikationsanlage mit
m (m ≥ 1) Wohnungsstationen,
mindestens einer Türstation mit m Rufeinrichtungen und
einem Bus zum Verbinden der Stationen miteinander,
die dazu ausgelegt ist, mit dem oben beschriebenen Verfahren eingerichtet zu werden.

Mit anderen Worten schafft die Erfindung eine Hauskommunikationsanlage, die mit jedem Anschließen einer (weiteren) Wohnungsstation selbsttätig eine Zuordnung der neu angeschlossenen Wohnungsstation zu einer vorbestimmten Rufeinrichtung vornimmt.

Die Erfindung schafft darüber hinaus eine Wohnungsstation für eine einen Bus aufweisende Hauskommunikationsanlage, wobei die Wohnungsstation dazu ausgelegt ist, ansprechend auf ein Anschließen an den Bus ein Anmeldesignal abzugeben. Eine solche Wohnungsstation ist insbesondere dazu geeignet, in einer Hauskommunikationsanlage eingesetzt zu werden, die mit dem oben im einzelnen beschriebenen Verfahren eingerichtet werden kann. Dabei wird die selbsttätig vorgenommene Zuordnung von Rufadressen durch das Anmeldesignal initiiert.

Bei der erfindungsgemäßen Wohnungsstation ist bevorzugt ein Speicher für eine einer Rufadresse zugeordnete Information vorgesehen.

Ferner schafft die Erfindung eine Steuereinrichtung für eine Hauskommunikationsanlage. Diese Steuereinrichtung ist dazu ausgelegt, ansprechend auf ein erstes Anmeldesignal ein einer ersten Rufadresse zugeordnetes Adreßsignal abzugeben und ggf. ansprechend auf ein darauffolgendes weiteres Adreßsignal ein einer weiteren, noch nicht vergebenen Rufadresse zugeordnetes weiteres Adreßsignal abzugeben.

Mit anderen Worten schafft die Erfindung damit eine Einrichtung, die insbesondere dazu dient, das selbsttätige Zuordnen von Rufadressen zu initiieren, nachdem infolge des Anschließens einer (weiteren) Wohnungsstation ein Anmeldesignal abgegeben worden ist.

Schließlich schafft die Erfindung eine Türstation für eine Hauskommunikationsanlage, mit mindestens einer Rufeinrichtung. Die erfindungsgemäße Türstation ist dazu ausgelegt, ansprechend auf ein erstes Adreßsignal eine dem ersten Adreßsignal zugeordnete Information in einem Adreßspeicher einer ersten Rufeinrichtung abzulegen und ggf. ansprechend auf ein darauffolgendes weiteres Adreßsignal eine dem weiteren Adreßsignal zugeordnete Information in einem Adreßspeicher einer weiteren, noch nicht belegten Rufeinrichtung abzulegen.

Damit schafft die Erfindung eine Türstation, die verwendet werden kann, um in einer Hauskommunikationsanlage das Auftreten eines Adreßsignals zu erfassen und daraufhin selbsttätig die jeweilige Rufeinrichtung dem Adreßsignal zuzuordnen.

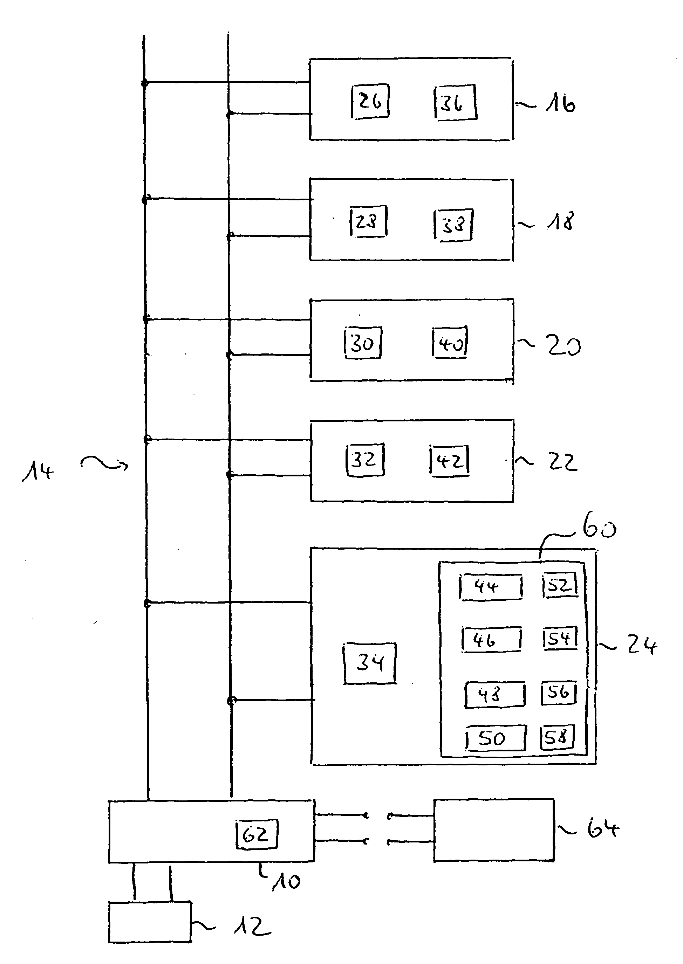

Im folgenden ist die Erfindung anhand eines bevorzugten Ausführungsbeispiels unter Bezugnahme auf die beiliegende Zeichnung mit weiteren Einzelheiten näher erläutert. Dabei zeigt die einzige Figur ein schematisches Blockschaltbild einer erfindungsgemäßen Hauskommunikationsanlage.

Zu der in der Zeichnung dargestellten Hauskommunikationsanlage gehört ein Bussteuergerät 10, das über ein Netzgerät 12 mit elektrischer Energie versorgt wird. Das Bussteuergerät 10 dient zur Steuerung eines Busses 14 sowie daran angeschlossener Stationen. Bei den Stationen handelt es sich um Wohnungsstationen 16, 18, 20 und 22 sowie um eine Türstation 24. Die genannten Stationen sind jeweils mit einer Sprech-/Höreinrichtung 26, 28, 30, 32 bzw. 34 ausgestattet, die zur Sprachkommunikation ausgelegt sind. Wenngleich dies in der Zeichnung nicht dargestellt ist, kann selbstverständlich auch eine Bildkommunikation vorgesehen sein. In einem solchen Fall ist die Türstation 24 mit einer Kamera ausgestattet, während die Wohnungsstationen 16, 18, 20 und 22 jeweils über einen Monitor verfügen.

Zur Speicherung einer jeweils ihrer Rufadresse entsprechenden Information dienen in den Wohnungsstationen 16, 18, 20 und 22 Speicher 36, 38, 40 bzw. 42. Entsprechend der Anzahl der an die Hauskommunikationsanlage angeschlossenen Wohnungsstationen verfügt die Türstation 24 über vier Rufeinrichtungen 44, 46, 48 und 50, denen jeweils ein Speicher 52, 54, 56, 58 zum Speichern von der jeweiligen Rufadresse zugeordneten Informationen zugeordnet ist. Die genannten Rufeinrichtungen 44 bis 50 mit den zugehörigen Speichern 52 bis 58 sind in einem Block 60 zusammengefaßt.

Das Bussteuergerät 10 verfügt über eine Programmiertaste 62. Über das Bussteuergerät 10 ist ein PC (personal computer) 64 an den Bus 14 anschließbar.

Das Einrichten der oben beschriebenen Hauskommunikationsanlage geht folgendermaßen vonstatten:

Zunächst werden das Bussteuergerät 10 mit dem Netzgerät 12 sowie die Türstation 24 an den Zwei-Draht-Bus 14 angeschlossen, jedoch noch nicht die Wohnungsstationen 16 bis 22. Daraufhin wird durch Betätigen der Programmiertaste 62 die Anlage in den Programmiermodus versetzt. Das Versetzen der Anlage in den Programmiermodus führt dazu, daß die Türstation 24 in einen sogenannten Lernmodus versetzt wird, in dem sie dazu in der Lage ist, Rufadressen entsprechende Informationen zu speichern, was unten noch detaillierter erläutert werden wird.

Wird nun die Wohnungsstation 16 an den Bus 14 angeschlossen, so gibt sie selbsttätig ein Anmeldesignal an den Bus. Ansprechend auf das Anmeldesignal teilt ihr das Bussteuergerät 10 eine Rufadresse zu, die in dem Adreßspeicher 36 abgespeichert wird. Diese Kommunikation zwischen der neu angemeldeten Wohnungsstation 16 und dem Bussteuergerät 10 wird über den Bus 14 von der Türstation 24 quasi "mitgehört", weil sich die Türstation 24 im Lernmodus befindet. Sobald das Bussteuergerät 10 die der Wohnungsstation 16 zugeordnete Rufadresse an den Bus 14 gibt, beschreibt die Türstation 24 den Speicher 52 der ersten Rufeinrichtung 44 mit einer entsprechenden Information.

Sobald dies geschehen ist, sind in den Speichern 36 und 52 jeweils Informationen abgespeichert, die der von dem Bussteuergerät 10 der Wohnungsstation 16 zugeordneten Rufadresse entsprechen. Wird nach dem Einrichten der Hauskommunikationsanlage die Rufeinrichtung 44 betätigt, so wird die Wohnungsstation 16 gerufen.

Nachdem der Speicher 52 beschrieben worden ist, wird die Wohnungsstation 18 als weitere bzw. zweite Wohnungsstation an den Bus 14 angeschlossen. Wiederum wird die daraufhin einsetzende Kommunikation zwischen dem Bussteuergerät 10 und der Wohnungsstation 18 von der Türstation 24 "mitgehört", woraufhin der der zweiten Wohnungsstation 18 zugeordneten Rufadresse entsprechende Informationen sowohl in dem Speicher 38 als auch in dem Speicher 54 abgelegt werden.

In gleicher Weise wird mit den übrigen Wohnungsstationen 20 und 22 verfahren.

Nachdem alle anzuschließenden Wohnungsstationen angeschlossen sind, wird die Programmiertaste 62 erneut betätigt, woraufhin die Türstation den Lernmodus verläßt und die Hauskommunikationsanlage den Programmiermodus verläßt. Wird jetzt eine der Rufeinrichtungen 44 bis 50 betätigt, so wird ein entsprechender Ruf in der zugehörigen Wohnungsstation 16, 18, 20 oder 22 ausgelöst.

Oben ist im einzelnen dargelegt worden, daß die Türstation 24 in einen Lernmodus versetzt wird, woraufhin sie die Kommunikation zwischen dem Bussteuergerät 10 und der jeweils gerade anzuschließenden Wohnungsstation 16 bis 22 "mithört" und eine entsprechende Information in dem jeweils zu belegenden Speicher 52 bis 58 ablegt.

Zusätzlich oder alternativ kann aber auch vorgesehen sein, daß entsprechende Funktionen von einem während des Einrichtens der Anlage anzuschließenden PC 64 wahrgenommen werden. Der PC 64 kann dabei direkt an den Bus 14 angeschlossen werden. Dies kann aber auch über das Bussteuergerät 10, die Türstation 24 oder eine der Wohnungsstationen 16 bis 22 erfolgen. Wie oben im Zusammenhang mit der Türstation 24 beschrieben, hört der PC 64 in einem solchen Fall die Kommunikation zwischen dem Bussteuergerät 10 und der jeweils anzuschließenden Wohnungsstation 16 bis 22 mit und beschreibt den jeweils zu belegenden Speicher 52, 54, 56 bzw. 58 mit der entsprechenden Information. Bei dieser Ausgestaltung der Hauskommunikationsanlage ist es nicht erforderlich, die Türstation derart auszugestalten, daß sie einen Lernmodus annehmen kann und selbsttätig die zu den Rufeinrichtungen gehörenden Speicher beschreibt.

Wie die obigen Ausführungen zeigen, ist das Einrichten der erfindungsgemäßen Hauskommunikationsanlage besonders einfach und geht besonders schnell vonstatten. Es muß nämlich nur die Programmiertaste 62 betätigt werden, gefolgt von dem aufeinanderfolgenden Anschließen der Wohnungsstationen 16 bis 22 an den Bus 14. Die Zuordnung der Wohnungsstationen 16 bis 22 zu den Rufeinrichtungen 44 bis 50 erfolgt im übrigen selbsttätig.

Sofern die Türstation 24 nicht zum selbsttätigen Beschreiben ihrer Speicher 52 bis 58 ausgelegt ist, ist zusätzlich noch ein entsprechend vorprogrammierter PC 64 anzuschließen.

Es bedarf kaum der Erwähnung, daß bei entsprechendem Vorbestimmen der Belegungsreihenfolge der Rufeinrichtungen 44 bis 50 nur die Wohnungsstationen 16 bis 22 in der entsprechenden Reihenfolge angeschlossen werden müssen, um jede beliebige Zuordnung zu erhalten.

Der Vollständigkeit halber wird zum Schluß noch darauf hingewiesen, daß die Rufeinrichtungen 44 bis 50 beliebig ausgestaltet sein können. In der Regel werden sie mit Ruftasten (Klingeltasten) ausgestattet sein.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Einrichten einer Hauskommunikationsanlage mit
n (n ≥ 2) Wohnungsstationen (16 bis 22),
mindestens einer Türstation (24) mit n Rufeinrichtungen (44 bis 50) und
einem Bus (14) zum Verbinden der Stationen (16, 18, 20, 22, 24) miteinander,
mit folgenden Schritten:
a) Die Türstation (24) wird an den Bus (14) angeschlossen,
b) eine erste Wohnungsstation (16) wird an den Bus (14) angeschlossen,
c) ansprechend auf das Anschließen an den Bus (14) gibt die Wohnungsstation (16) ein Anmeldesignal ab,
d) ansprechend auf das Anmeldesignal wird eine erste Rufadresse sowohl der Wohnungsstation (16) als auch einer ersten Rufeinrichtung (44) zugeordnet,
e) eine weitere Wohnungsstation (18) wird an den Bus (14) angeschlossen,
f) ansprechend auf das Anschließen an den Bus (14) gibt die weitere Wohnungsstation (18) ein Anmeldesignal ab,
g) ansprechend auf das Anmeldesignal wird eine weitere, noch nicht vergebene Rufadresse sowohl der weiteren Wohnungsstation (18) als auch einer weiteren, noch nicht belegten Rufeinrichtung (46) zugeordnet,
h) die Schritte e) bis g) werden (n - 2) Mal wiederholt.

2. Verfahren zum Einrichten einer Hauskommunikationsanlage mit
einer Wohnungsstation,
mindestens einer Türstation mit einer Rufeinrichtung und
einem Bus zum Verbinden der Stationen miteinander,
mit folgenden Schritten:
Die Türstation wird an den Bus angeschlossen,
die Wohnungsstation wird an den Bus angeschlossen,
ansprechend auf das Anschließen an den Bus gibt die Wohnungsstation ein Anmeldesignal ab und
ansprechend auf das Anmeldesignal wird eine Rufadresse sowohl der Wohnungsstation als auch der Rufeinrichtung zugeordnet.

3. Verfahren nach Anspruch 1 oder 2, **dadurch gekennzeichnet, daß** sich die Hauskommunikationsanlage zum Zeitpunkt des Anschließens einer Wohnungsstation (16 bis 22) in einem Programmiermodus und/oder die Türstation (24) in einem Lernmodus befinden / befindet.

4. Verfahren nach einem der vorangehenden Ansprüche, **dadurch gekennzeichnet, daß** zum Zuordnen einer Rufadresse eine Steuereinrichtung (10) ein der Rufadresse zugeordnetes Adreßsignal an den Bus (14) gibt.

5. Verfahren nach Anspruch 4, **dadurch gekennzeichnet, daß** die Türstation (24) ansprechend auf ein Adreßsignal einer Rufeinrichtung (44 bis 50) und/oder einer Wohnungsstation (16 bis 22) die entsprechende Rufadresse zuordnet.

6. Verfahren nach Anspruch 4 oder 5, **dadurch gekennzeichnet, daß** eine Zuordnungseinrichtung (64) an den Bus (14) angeschlossen wird, die ansprechend auf ein Adreßsignal einer Rufeinrichtung (44 bis 50) und/oder einer Wohnungsstation (16 bis 22) die entsprechende Rufadresse zuordnet.

7. Verfahren nach einem der vorangehenden Ansprüche, **dadurch gekennzeichnet, daß** zum Zuordnen einer Rufadresse zu einer Wohnungsstation (16 bis 22) und/oder einer Rufeinrichtung (44 bis 50) ein der Wohnungsstation (16 bis 22) bzw. der Rufeinrichtung (44 bis 50) zugeordneter Speicher (36 bis 42; 52 bis 58) mit einer der Rufadresse zugeordneten Information beschrieben wird.

8. Hauskommunikationsanlage mit
m (m ≥ 1) Wohnungsstationen (16 bis 22),
mindestens einer Türstation (24) mit m Rufeinrichtungen (44 bis 50) und
einem Bus (14) zum Verbinden der Stationen (16, 18, 20, 22, 24) miteinander,
**dadurch gekennzeichnet, daß**
sie dazu ausgelegt ist, mit dem Verfahren nach einem der Ansprüche 1 bis 7 eingerichtet zu werden.

9. Wohnungsstation für eine einen Bus (14) aufweisende Hauskommunikationsanlage,
**dadurch gekennzeichnet, daß**
sie dazu ausgelegt ist, ansprechend auf ein Anschließen an den Bus (14) ein Anmeldesignal abzugeben.

10. Wohnungsstation nach Anspruch 9, **gekennzeichnet durch** einen Speicher (36, 38, 40, 42) für eine einer Rufadresse zugeordneten Information.

11. Steuereinrichtung für eine Hauskommunikationsanlage,
**dadurch gekennzeichnet, daß**
sie dazu ausgelegt ist, ansprechend auf ein erstes Anmeldesignal ein einer ersten Rufadresse zugeordnetes Adreßsignal abzugeben.

12. Steuereinrichtung nach Anspruch 11, **dadurch gekennzeichnet, daß** sie dazu ausgelegt ist, ansprechend auf ein auf das erste Anmeldesignal folgendes weiteres Anmeldesignal ein einer weiteren, noch nicht vergebenen Rufadresse zugeordnetes weiteres Adreßsignal abzugeben.

13. Türstation für eine Hauskommunikationsanlage, mit mindestens einer Rufeinrichtung (44 bis 50),
**dadurch gekennzeichnet, daß**
sie dazu ausgelegt ist, ansprechend auf ein erstes Adreßsignal eine dem ersten Adreßsignal zugeordneten Information in einem Adreßspeicher (52) einer ersten Rufeinrichtung (44) abzulegen.

14. Türstation nach Anspruch 13, **dadurch gekennzeichnet, daß** sie dazu ausgelegt ist, ansprechend auf ein auf das erste Adreßsignal folgendes weiteres Adreßsignal eine dem weiteren Adreßsignal zugeordnete Information in einem Adreßspeicher (54) einer weiteren, noch nicht belegten Rufeinrichtung (46) abzulegen.

## Claims

1. A method for setting up a house communication system comprising
n (n ≥ 2) dwelling stations (16 to 22),
at least one door station (24) with n call devices (44 to 50), and
a bus (14) for connecting the stations (16, 18, 20, 22, 24) to one another,
with the following steps:
a) The door station (24) is connected to the bus (14),
b) a first dwelling station (16) is connected to the bus (14),
c) in response to connection to the bus (14), the dwelling station (16) emits an announcement signal,
d) in response to the announcement signal, a first call address is assigned both the to dwelling station (16) and to a first call device (44),
e) a further dwelling station (18) is connected to the bus (14),
f) in response to connection to the bus (14), the further dwelling station (18) emits an announcement signal,
g) in response to the announcement signal, a further, not yet allocated call address is assigned both to the further dwelling station (18) and to a further, not yet used call device (46),
h) steps e) to g) are repeated (n - 2) times.

2. A method for setting up a house communication system comprising
a dwelling station,
at least one door station with a call device, and
a bus for connecting the stations to one another,
with the following steps:
The door station is connected to the bus,
the dwelling station is connected to the bus,
in response to connection to the bus, the dwelling station emits an announcement signal, and
in response to the announcement signal, a call address is assigned both to the dwelling station and to the call device.

3. The method according to Claim 1 or 2, **characterised in that** at the time when a dwelling station (16 to 22) is connected, the house communication system is in a programming mode and/or the door station (24) is in a learning mode.

4. The method according to any of the preceding claims, **characterised in that** in order to assign a call address, a control device (10) gives an address signal assigned to the call address to the bus (14).

5. The method according to Claim 4, **characterised in that** in response to an address signal, the door station (24) assigns the corresponding call address to a call device (44 to 50) and/or to a dwelling station (16 to 22).

6. The method according to Claim 4 or 5, **characterised in that** an assignment device (64) is connected to the bus (14), and in response to an address signal, said assignment device (64) assigns a corresponding call address to a call device (44 to 50) and/or to a dwelling station (16 to 22).

7. The method according to any of the preceding claims, **characterised in that** in order to assign a call address to a dwelling station (16 to 22) and/or to a call device (44 to 50), a storage unit (36 to 42; 52 to 58) assigned to the dwelling station (16 to 22) or to the call device (44 to 50) and with information assigned to the call address is described.

8. A house communication system comprising
m (m ≥ 1) dwelling stations (16 to 22),
at least one door station (24) with m call devices (44 to 50), and
a bus (14) for connecting the stations (16, 18, 20, 22, 24) to one another,
**characterised in that**
it is designed to be set up using the method according to any of Claims 1 to 7.

9. A dwelling station for a house communication system having a bus (14)
**characterised in that**
it is designed to emit an announcement signal in response to connection to the bus (14).

10. The dwelling station according to Claim 9, **characterised by** a storage unit (36, 38, 40, 42) for information assigned to a call address.

11. A control device for a house communication system,
**characterised in that**
it is designed to emit an address signal assigned to a first call address in response to a first announcement signal.

12. The control device according to Claim 11, **characterised in that** it is designed to emit a further address signal assigned to a further, not yet allocated call address in response to a further announcement signal following the first announcement signal.

13. A door station for a house communication system with at least one call device (44 to 50),
**characterised in that**
it is designed to deposit information assigned to the first address signal in a first address storage unit (52) of a first call device (44) in response to a first address signal.

14. The door station according to Claim 13, **characterised in that** it is designed to deposit information assigned to the further address signal in an address storage unit (54) of a further, not yet used call device (46) in response to a further address signal following the first address signal.

## Revendications

1. Procédé pour mettre en place un appareil interphone comprenant n (n ≥ 2) postes d'appartement (16 à 22), au moins un poste de porte (24) avec n dispositifs d'appel (44 à 50) et un bus (14) pour la liaison entre les postes (16, 18, 20, 22, 24), comprenant les étapes suivantes:
a) le poste de porte (24) est raccordé au bus (14),
b) un premier poste d'appartement (16) est raccordé au bus (14),
c) en réponse au raccordement au bus (14), le poste d'appartement (16) envoie un signal de demande,
d) en réponse au signal de demande, une première adresse d'appel est attribuée aussi bien au poste d'appartement (16) qu'à un premier dispositif d'appel (44),
e) un autre poste d'appartement (18) est raccordé au bus (14),
f) en réponse au raccordement au bus (14), l'autre poste d'appartement (18) envoie un signal de demande,
g) en réponse au signal de demande, une autre adresse d'appel non encore attribuée est attribuée aussi bien à l'autre poste d'appartement (18) qu'à un autre dispositif d'appel (46) non encore occupé,
h) les étapes e) à g) sont répétées (n - 2) fois.

2. Procédé pour mettre en place un appareil interphone comprenant un poste d'appartement, au moins un poste de porte avec un dispositif d'appel et un bus pour la liaison entre les postes, comprenant les étapes suivantes:
le poste de porte est raccordé au bus,
le poste d'appartement est raccordé au bus,
en réponse au raccordement au bus, le poste d'appartement envoie un signal de demande et
en réponse au signal de demande, une adresse d'appel est attribuée aussi bien au poste d'appartement qu'au dispositif d'appel.

3. Procédé selon la revendication 1 ou 2, **caractérisé en ce que** l'appareil interphone et/ou le poste de porte (24) se trouvent respectivement dans un mode de programmation et dans un mode d'apprentissage au moment du raccordement d'un poste d'appartement (16 à 22).

4. Procédé selon l'une quelconque des revendications précédentes, **caractérisé en ce qu'**un dispositif de commande (10) envoie un signal d'adresse attribué à l'adresse d'appel au bus (14) pour l'attribution d'une adresse d'appel.

5. Procédé selon la revendication 4, **caractérisé en ce que** le poste de porte (24) attribue l'adresse d'appel correspondante à un dispositif d'appel (44 à 50) et/ou un poste d'appartement (16 à 22) en réponse à un signal d'adresse.

6. Procédé selon la revendication 4 ou 5, **caractérisé en ce qu'**un dispositif d'attribution (64) est raccordé au bus (14), qui attribue l'adresse d'appel correspondante à un dispositif d'appel (44 à 50) et/ou un poste d'appartement (16 à 22) en réponse à un signal d'adresse.

7. Procédé selon l'une quelconque des revendications précédentes, **caractérisé en ce que**, pour l'attribution d'une adresse d'appel à un poste d'appartement (16 à 22) et/ou à un dispositif d'appel (44 à 50), une mémoire (36 à 42; 52 à 58) attribuée au poste d'appartement (16 à 22) ou au dispositif d'appel (44 à 50) est décrite avec une information attribuée à l'adresse d'appel.

8. Appareil interphone comprenant m(m ≥ 1) postes d'appartement (16 à 22), au moins un poste de porte (24) avec m dispositifs d'appel (44 à 50) et un bus (14) pour la liaison entre les postes (16, 18, 20, 22, 24), **caractérisé en ce qu'**il est conçu pour être mis en place avec le procédé selon l'une quelconque des revendications 1 à 7.

9. Poste d'appartement pour un poste d'interphone présent dans un bus (14), **caractérisé en ce qu'**il est conçu pour envoyer un signal de demande en réponse à un raccordement au bus (14).

10. Poste d'appartement selon la revendication 9, **caractérisé par** une mémoire (36, 38, 40, 42) pour une information attribuée à une adresse d'appel.

11. Dispositif de commande pour un poste d'interphone, **caractérisé en ce qu'**il est conçu pour envoyer une adresse de signal attribuée à une première adresse d'appel en réponse à un premier signal de demande.

12. Dispositif de commande selon la revendication 11, **caractérisé en ce qu'**il est conçu pour envoyer un autre signal d'adresse attribué à une autre adresse d'appel non encore attribuée en réponse à un autre signal de demande consécutif au premier signal de demande.

13. Poste de porte pour un appareil interphone, comprenant au moins un dispositif d'appel (44 à 50), **caractérisé en ce qu'**il est conçu pour déposer en réponse à un premier signal d'adresse une information attribuée au premier signal d'adresse dans une mémoire d'adresse (52) d'un premier dispositif d'appel (44).

14. Poste de porte selon la revendication 13, **caractérisé en ce qu'**il est conçu pour déposer une information attribuée à l'autre signal d'adresse dans une mémoire d'adresse (54) d'un autre dispositif d'appel (46) non encore occupé en réponse à un autre signal d'adresse consécutif au premier signal d'adresse.
